# EUROPEAN PATENT APPLICATION

(11) **EP 4 357 958 A2**
(43) Date of publication of application: **24.04.2024**
(21) Application number: 23204037.8
(22) Date of filing: 17.10.2023
(51) Int. Cl.: G06F 30/00, G06T 19/20

(54) **SYSTEM AND METHODS FOR AUTOMATIC REPAIR OF MISSING MATE REFERENCES**

(30) Priority: 17.10.2022 US 202218046972
(71) Applicant: Dassault Systemes Solidworks Corporation, Waltham, MA 02451 (US)
(72) Inventor: Birkett-Smith, Nicholas Constantine, Cambridge (GB); Venkatesh, Pruthvi, Bengaluru (IN); Bharvirkar, Manish, Pune (IN); Brooking, Christopher George, Cambridge (GB); Sinha, Sushant, Pune (IN)
(74) Representative: Bandpay & Greuter

(57) **Abstract**

A system and method automatically repairs a reference corresponding to a missing constraint of a component feature in a computer aided drafting (CAD) environment. A first component is identified where the reference indicates the missing component feature belongs. A solid or surface body of the first component is identified. A candidate replacement feature of the first solid or surface body is identified. The candidate replacement feature is compared with the missing feature. If the candidate comparison meets a predetermined criteria, the missing constraint reference is replaced with a reference to the candidate replacement feature.

## Description

### FIELD OF THE INVENTION

The present invention relates to modeling of physical systems, and more particularly, is related to simplifying repetitive processes in a modeled system.

### BACKGROUND OF THE INVENTION

When creating a computer aided drafting (CAD) model of a physical assembly, the process of inserting, moving, orienting, and constraining a component is often involves multiple steps. An assembly typically includes mates (constraints) that define the position between components. A mate references specific elements of geometry on at least two components of the assembly. If the user makes a significant design change to a component, the geometry referenced by the assembly mate may be altered or may no longer be present. When the CAD software recognizes the user change has resulted in loss of a mate, the CAD interface may alert the user, for example, by displaying a "Missing reference" mate error. Typically, user responds by manually editing the mate reference and choosing a suitable replacement constraint.

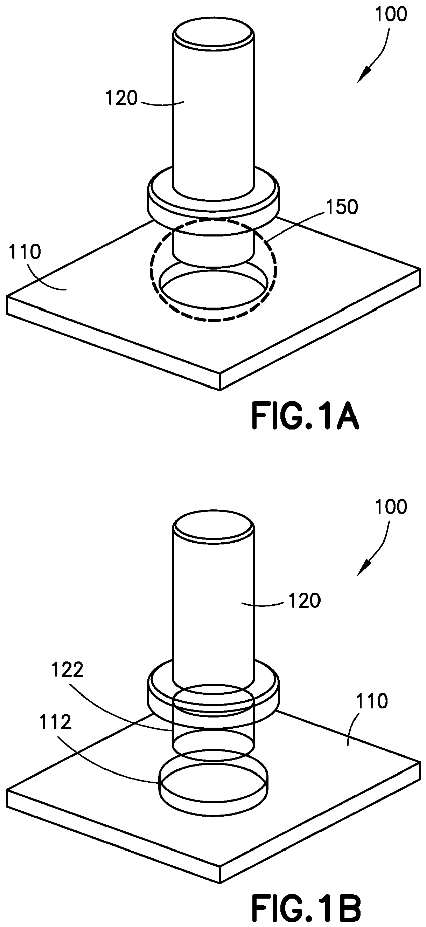

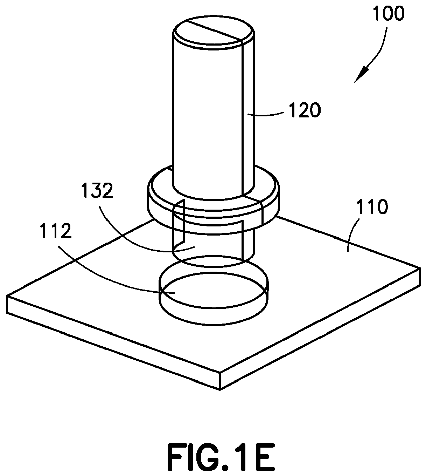

FIGS. 1A-1D show an example a scenario resulting in a missing mate. As shown by FIG. 1A, an assembly 100 includes two components: a shaft 120 and a plate 110. the assembly 100 includes constraint (Mate) 150 which controls the relative position of the shaft 120 and the plate 110. As shown by FIG. 1B, the constraint 150 is a concentric constraint which constrains a cylindrical face 122 of the shaft 120 concentrically to a cylindrical face 112 of the plate 110. Each face 112, 122 has an internal ID, used by the CAD program to identify the two selected entities of the constraint 150.

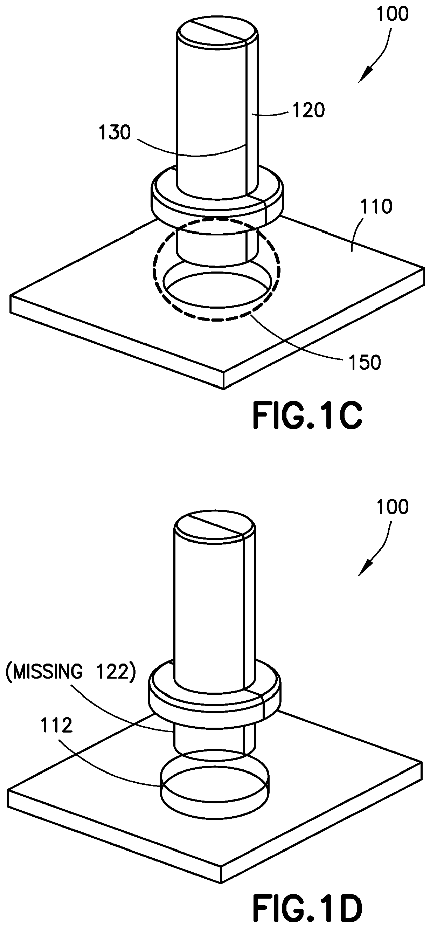

As shown by FIG. 1C, the user makes a change to the shaft 120 which causes the internal ID of the shaft faces 122 to change. In this example the user has added a split line 130 on the shaft 120, essentially splitting the cylindrical face of the shaft 120 into two faces, and hence changing the ID of the faces of shaft 120. As shown by FIG. 1D, the cylindrical face 112 of the plate 110 is present after the user change, but the cylindrical face 122 (FIG. 1B) of the shaft 120 is no longer present. The concentric mate 150 fails because the face 122 from the shaft 120 is not available to the concentric mate since the face ID on the shaft 120 has changed as a result of the user change. The CAD program may therefore display an error message regarding the constraint in the user interface. However, manually restoring or replacing the missing mate may be a time consuming process. Therefore, there is a need in the industry to address the abovementioned shortcomings.

### SUMMARY OF THE INVENTION

Embodiments of the present invention provide a system and method for automatic repair of missing mate references. Briefly described, the present invention is directed to a system and method that automatically repairs a reference corresponding to a missing constraint of a component feature in a computer aided drafting (CAD) environment. A first component is identified where the reference indicates the missing component feature belongs. A solid or surface body of the first component is identified. A candidate replacement feature of the first solid or surface body is identified. The candidate replacement feature is compared with the missing feature. If the candidate comparison meets a predetermined criteria, the missing constraint reference is replaced with a reference to the candidate replacement feature.

Other systems, methods and features of the present invention will be or become apparent to one having ordinary skill in the art upon examining the following drawings and detailed description. It is intended that all such additional systems, methods, and features be included in this description, be within the scope of the present invention and protected by the accompanying claims.

It is provided a computer aided drafting (CAD) system comprising a processor and a memory containing non-transient instructions that, when executed by the processor, run an auto-repair application for automatically repairing a reference corresponding to a missing constraint of a component feature, the constraint missing from the component of a modeled assembly in the (CAD) system based on a modification to the assembly. The auto-repair application is configured to:
- identify a first component where the reference indicates the missing component feature belongs;
- identify a solid or surface body of the first component;
- identify a candidate replacement feature of the first solid or surface body;
- compare the candidate replacement feature with the missing feature; and
- if the candidate comparison meets a predetermined criteria, replace the missing constraint reference with a reference of the candidate replacement feature.

The system may comprise one or more of the following:
- The candidate comparison further comprises:
   o comparing the orientation of the candidate replacement feature with the orientation of the missing feature; and
   o comparing the location of the candidate replacement feature with the location of the missing feature;
- The missing feature comprises a face;
- The face consists of one of the group of a planar face, a cylindrical face, a conical face, a toroidal face, and a spherical face;
- The comparing further comprises determining the features are coplanar;
- The missing feature comprises an edge;
- The edge consists of one of the group of a linear edge, a curved edge, a reference axis, a circular edge, a spline, and an ellipse; and/or
- The auto-repair application further configured to :
   o if the candidate comparison fails the predetermined criteria:
      o identify a reference feature in the first component that matches a parameter of the missing feature;
      o compare the reference feature with the missing feature; and
      o if the reference feature comparison meets the predetermined criteria, replace the missing constraint reference with the reference feature.

It is also provided a method for automatically repairing a reference corresponding to a missing constraint of a component feature, the constraint missing from the component of a modeled assembly in a computer aided drafting (CAD) environment based on a modification to the assembly. The method comprises the steps of:
- identifying a first component where the reference indicates the missing component feature belongs;
- identifying a solid or surface body of the first component;
- identifying a candidate replacement feature of the first solid or surface body;
- comparing the candidate replacement feature with the missing feature; and
- if the candidate comparison meets a predetermined criteria, replacing the missing constraint reference with a reference of the candidate replacement feature.

The method may comprise one or more of the following:
- The candidate comparison further comprises:
   - comparing the orientation of the candidate replacement feature with the orientation of the missing feature; and
   - comparing the location of the candidate replacement feature with the location of the missing feature;
   - The missing feature comprises a face;
   - The face consists of one of the group of a planar face, a cylindrical face, a conical face, a toroidal face, and a spherical face;
   - The comparing further comprises determining the features are coplanar;
   - The missing feature comprises an edge;
   - The edge consists of one of the group of a linear edge, a curved edge, a reference axis, a circular edge, a spline, and an ellipse;
- The method further comprises the steps of:
   o if the candidate comparison fails the predetermined criteria:
      o identifying a reference feature in the first component that matches a parameter of the missing feature;
      o comparing the reference feature with the missing feature; and
      o if the reference feature comparison meets the predetermined criteria, replacing the missing constraint reference with the reference feature; and/or
- Identifying the candidate replacement feature of the first solid or surface body further comprises the steps of:
   o calculating a first bounding box having dimensions and coordinates containing the missing feature,
   o computing second bounding box a solid or surface body of the component; and
   o identifying an intersection between the first bounding box and the second bounding box.

### BRIEF DESCRIPTION OF THE DRAWINGS

The accompanying drawings are included to provide a further understanding of the invention, and are incorporated in and constitute a part of this specification. The components in the drawings are not necessarily to scale, emphasis instead being placed upon clearly illustrating the principles of the present invention. The drawings illustrate embodiments of the invention and, together with the description, serve to explain the principles of the invention.
FIG. 1A is a schematic diagram of a constraint between two components of an assembly in a CAD environment.
FIG. 1B is a schematic diagram detailing faces of the constraint of FIG. 1A.
FIG. 1C is a schematic diagram illustrating a user change to the assembly of FIG. 1A resulting in a missing constraint.
FIG. 1D is a schematic diagram showing a location corresponding to the missing constraint of FIG. 1C.
FIG. 1E is a schematic diagram showing a location of a replacement for the missing constraint of FIG. 1C.
FIG. 2A is a screenshot showing a CAD program with missing mates under a first embodiment of the present invention.
FIG. 2B is a screenshot of the CAD program of FIG. 2B with repaired mates.
FIG. 3 is a screenshot of CAD program with missing mates under a first embodiment of the present invention.
FIG. 4A is a first flowchart of a first exemplary method embodiment for automatically finding a missing mate.
FIG. 4B is a continuation of the flowchart of FIG. 4A.
FIG. 5 is a screenshot from a CAD program under the second embodiment showing a failed mate due to missing entity in view only mode i.e., with tessellated data only.
FIG. 6A is a first flowchart of a second exemplary method embodiment for automatically finding a missing mate.
FIG. 6B is a continuation of the flowchart of FIG. 6A.

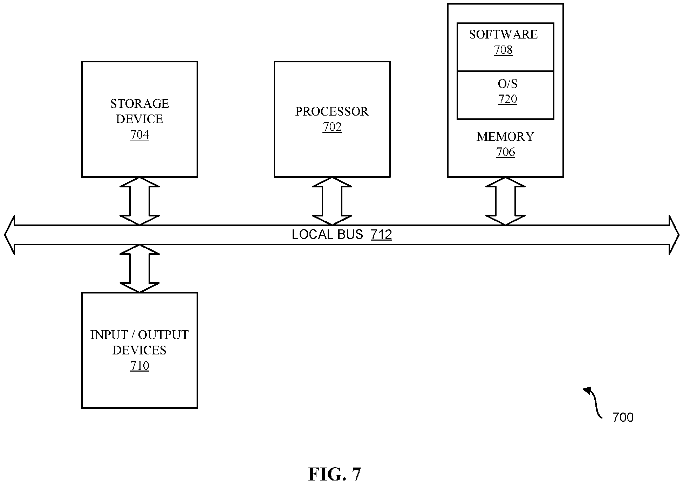

FIG. 7 is a schematic diagram illustrating an example of a system for executing functionality of the present invention.

### DETAILED DESCRIPTION

The following definitions are useful for interpreting terms applied to features of the embodiments disclosed herein, and are meant only to define elements within the disclosure.

As used within this disclosure, a "modeled object" or a "modeled assembly" refers to a computer rendered representation of a physical structure, for example, a real-world product from the field of mechanical and/or electrical engineering. In general, the modeled object is represented by numerical data stored in data structures manipulated via a CAD system, which may be referred to has the CAD environment, where the modeled object may be represented by the CAD environment user interface, for example, graphically in two or three dimensions, and/ or via parts/components lists, among others.

As used within this disclosure, a "feature" or "entity" of an assembly refers to a specific geometric element of an assembly component, for example (but not limited to) a face, an edge, a vertex, and a reference point, axis, or a plane.

As used within this disclosure, a "reference" or "reference point" of a modeled object refers to a data structure describing location of an identifiable feature of a component of the modeled object, for example, a location within the component with respect to a known location, such as an origin of a coordinate system. The reference may indicate specific geometrical properties of the feature, for example, stored in a descriptor table. A reference plane is a type of reference geometry. Reference geometry is used to help define a parametric 3D model, without impacting the solid/surface geometry of the model. For example, a reference plane might be used to define symmetry on a part, meaning features on one side can be mirrored about the plane, to the other side of the part. Other common types of reference geometry include reference axes, reference points, and coordinate systems.

As used within this disclosure, a "constraint" refers to any first feature (of a first component) that restrictions motion of a second feature (of a second component) in one or more directions. A constraint may be defined by a number of reference points on the first feature and the second feature. An example of a constraint is two coincident faces. A constraint can be removed, for example by a change in geometry of one or more components, or the removal of one of the components. In particular, a change in geometry of one or more components may result in one or more of the references previously included in a constraint being either relocated (so the reference is no longer part of the constraint), or removed from the feature.

One example of a constraint is a coincident constraint, which is added between the combinations of entities shown in Table 1 below:

**Table 1: Example of coincident constraint**

| | Circular/ Arc Edge | Cone | Coordinate System | Cylinder | Line | Origin | Plane | Point | Sphere |
|---|---|---|---|---|---|---|---|---|---|
| Circular/ Arc Edge | x | x | | x | | | x | x | |
| Cone | x | x | | | | | | x | |
| Coordinate System | | | x | | | x | | | |
| Cylinder | x | | | | x | | | x | |
| Line | | | | x | x | | x | x | |
| Origin | | | x | | | x | | | |
| Plane | x | | | | x | | x | | |
| Point | x | x | | x | x | | x | x | x |
| Sphere | | | | | | | x | | |

As used within this disclosure, a "missing reference" refers to a previously identified reference of a constraint that, as a result of a change to the model, is no longer present in the assembly. For example, a missing reference may be the result of the corresponding feature either addition of another feature that modifies the internal representation of the first, or removed from the component defining the constraint.

As used within this disclosure, a "mate" between two components refers to at least one constraint amongst the components.

As used within this disclosure, a "mate reference" refers to a reference to one or more components of a mate/constraint.

As used within this disclosure, an "automatic repair" refers to a computer execution of a sequence of steps in place of the user manually (via the CAD environment user interface) performing the individual steps. While in general all actions undertaken in a CAD environment are computer implemented, here automation refers to a grouping of related steps into tasks to reduce the user-computer interaction to perform the desired task. The level of user-computer interaction involved may depend on a level of automation foreseen and put in balance with specified user preferences.

As used within this disclosure, a coincident mate is a mate that forces two planar faces to become coplanar. A concentric mate forces two cylindrical or conical faces to become coaxial.

A "Path mate" is another type of mate, more complex than the concentric mate. A path mate constrains a point/vertex of one component to a "path" on another component. A path includes an edge/curve, or a contiguous selection of multiple edges/curves.

As used within this disclosure, a "descriptor" refers to a data structure describing the properties of a local region of geometry within the modeled assembly. A descriptor may include both text fields and numerical fields, as well as fields indicating relationships with other components and/or structural features. This usage of the term 'descriptor' is common in information retrieval systems. For example, in image retrieval system, descriptors contain the visual features of images such as shape, color or texture that help classify images. In a music search system, a descriptor may contain properties such as rhythm, scale, genre, artists etc. In a document retrieval system, a descriptor may contain the counts of individual words, author, language etc.

As used within this disclosure, a "face" refers to a surface of a part of a 2D or 3D modeled assembly. There may be several types of faces in an assembly, including (but not limited to) a planar face, a cylindrical face, a conical face, a toroidal face, and a spherical face.

As used within this disclosure, an "edge" refers to an intersection between two or more faces of a 2D or 3D modeled assembly. There may be several types of edges in an assembly, including (but not limited to) a linear edge, a curved edge, a reference plane, a reference point, a circular edge, a spline, and an ellipse.

As used within this disclosure, a "repair mates application" or "auto-repair application" refers to a set of routines used to find and repair missing constraints (mates) for a model in a CAD environment. The repair mates application may be integral to the CAD environment, or may be hosted remotely from the CAD environment.

As used within this disclosure "mate alignment" refers to an orientation of a potential mate. Mate alignment may be set for many mate types. A mate may have two alignment conditions: "Aligned" and "Anti-aligned." In the example of a coincident mate where two planar faces are selected, the "Aligned" condition would align the face normal in the same direction, whereas "Anti-aligned" will set the normal directions exactly opposite to each other. Alignment can be applied when the two references can have a 'direction' implied. A line is defined by a point and a direction vector, a plane by a point and a face normal. A vertex, being just a point, can have no direction. Both references need to have such directions in order to be aligned, or anti-aligned. In examples discussed herein, it may be necessary to reverse the current alignment of the constraint to maintain the correct relative positioning, if the direction of the new reference is in the opposite sense of the original reference.

As used withing this disclosure, "predetermined criteria" refers to a set of threshold parameters used to determine whether a comparison between a candidate feature reference and a missing constraint reference indicates the feature are either identical or sufficiently similar that the candidate feature reference may be used to replace the missing constraint reference. There may be several sets of predetermined criteria corresponding to the geometry of the missing constraint reference, for example a face (planar, cylindrical, conical, etc.,) an edge, and/or a vertex, among others.

As referred to within this disclosure, "tessellated data" refers to data describing a model that has been tessellated for rendering. In computer graphics, tessellation refers to the dividing of datasets of polygons presenting objects in an assembly into suitable structures for rendering. The tessellated data is reduced from the full assembly modal data, but retains information to render the basic geometrical structure.

As referred to within this disclosure, a "tessellated entity" refers to a model or component of a model that has been tessellated for rendering.

Reference will now be made in detail to embodiments of the present invention, examples of which are illustrated in the accompanying drawings. Wherever possible, the same reference numbers are used in the drawings and the description to refer to the same or like parts.

Exemplary embodiments of the present invention receive a "Missing reference" mate error in a CAD environment, and analyze the geometry of the component which previously contained the now-missing reference. If there is any suitable replacement geometry, the mate may be automatically updated to use that replacement geometry. Suitable geometry is defined as geometry of the same geometric type, and in an identical position and orientation. This represents a significant savings of time for the user who previously had to manually repair mates having missing reference errors.

Referring back to the Background section description of FIGS. 1A-1D, the first embodiment the CAD system provides a command giving the user the option to automatically repair the failed constraint 150 (FIG. 1C). After invoking the automatic repair command, a repair mates application searches the shaft component 120 for an alternative face 132 which shares the same position and orientation as the missing face 112. If such a face is found, repair mates application automatically used alternative face 132 as a replacement in the failed constraint, thereby solving the missing constraint, as shown by FIG. IE.

Under the first embodiment, if any constraints (mates) have missing references, the repair mates application causes the CAD program to display an error in the user interface. The user can choose to run the `Auto Repair' command shown from a context menu. This initiates a search for the best matching entity that can be used to replace the missing reference. If the repair mates application is able to find matching entities, the repair mates application replaces those missing references and resolve the errors. If no exact match can be found the constraint is not automatically repaired, and the user must manually repair the mate.

The repair mates application searches for and replaces faces of several types, for example, but not limited to planar, cylindrical, spherical, conical, and toroidal faces, or a general face, for example, a face resulting from swept feature, or extruded from splines, ellipses etc.

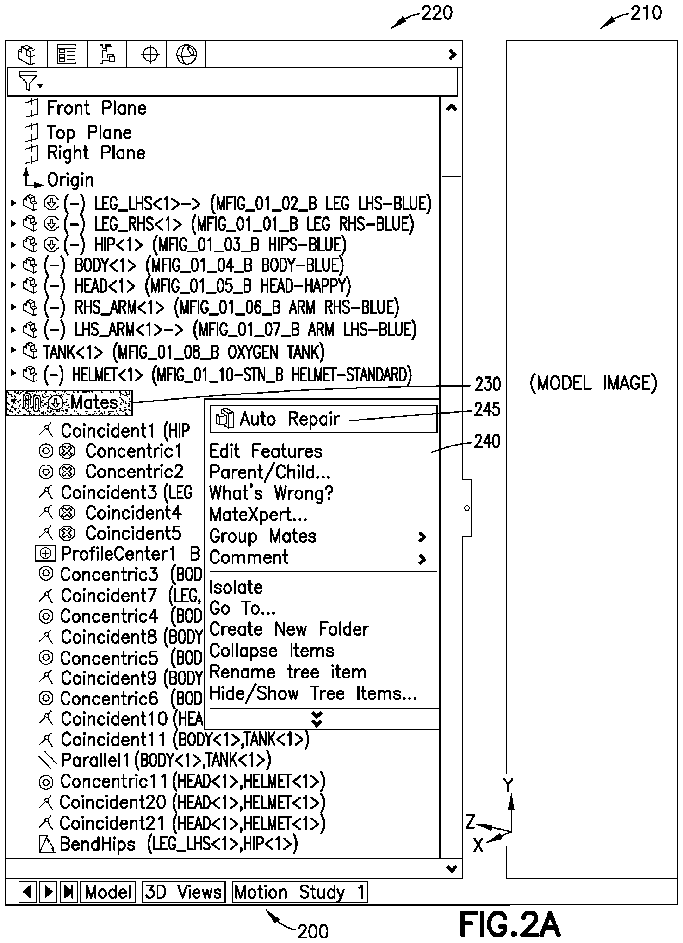

As shown by FIG. 2A, under a first exemplary embodiment, a CAD program 200 displays a model 210 and a components list 120. If any mates have missing references, the CAD program 200 displays an error in a mates group folder 230. Selecting the mates group folder 230 in the components list 220 presents a pop-up window 240, including an "auto-repair" option 245. By selecting the auto-repair option 245, the user instructs the CAD program 200 to run an auto repair application, initiating a search for the best matching entity that can be used to replace the missing reference.

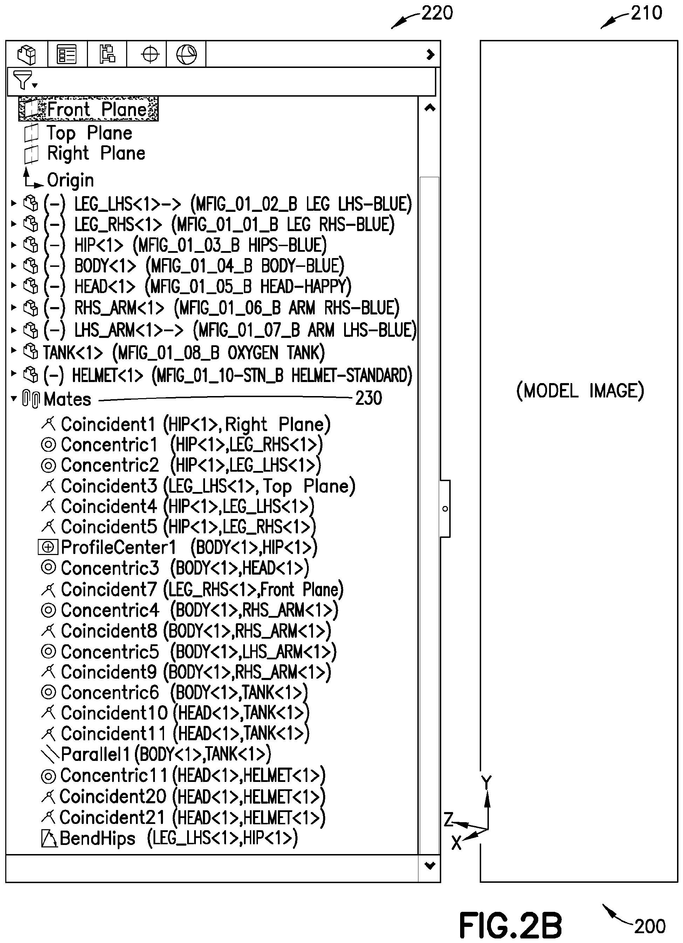

If the command is able to find matching entities, it updates the mates list by replacing the missing mate reference(s) and resolve the errors, as shown by FIG. 2B. If instead user wants to repair a single mate error, that will be done by running the same command from the selected mate's context menu.

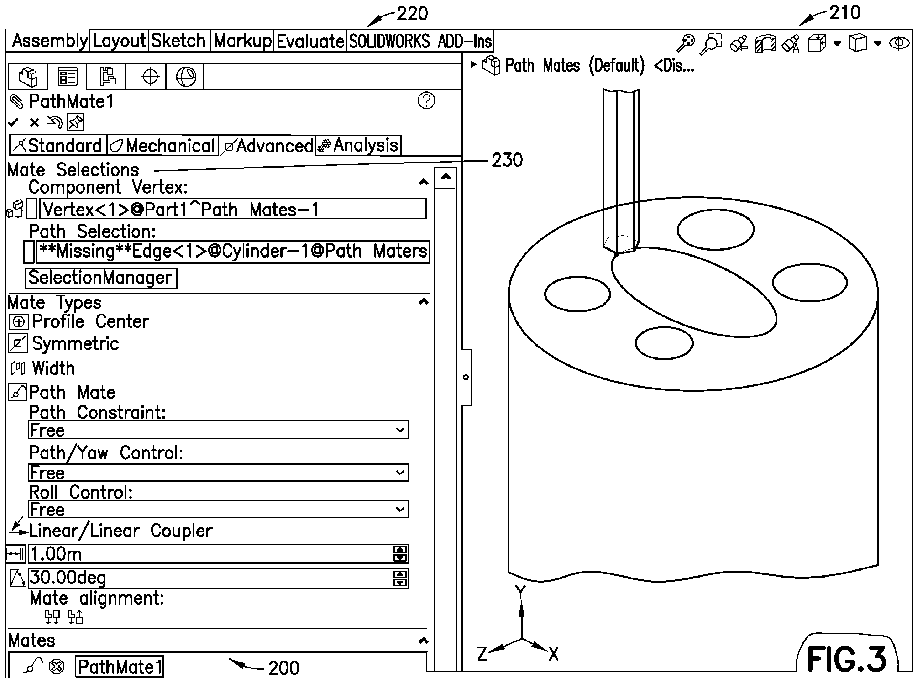

FIG. 3 shows another example of a mate failure caused by a missing face under the first embodiment. FIG. 3 shows a path mate failure caused by a missing edge (path). The internal ID of an edge/curve used in the user selection which defines the "path" of the path mate. If the component was changed such that the internal ID of an entity in the path is lost, then the path mate fails. Here, the edge ID is lost, for example, because user replaced the original part with a replacement part having slightly different geometry. In this case, the auto-repair application searches for a matching edge belonging to the same component at the same location as the missing edge. Under the first embodiment, the auto-repair application searches and replaces edges of the following types: linear, cylindrical, or any general curve/edge like those created by splines, ellipses etc.

In addition to faces and edges, the command will search and replace missing vertices, ref planes, ref axis and ref points.

The first embodiment is described below with reference to several scenarios specific to automatically repairing missing mates for particular features.

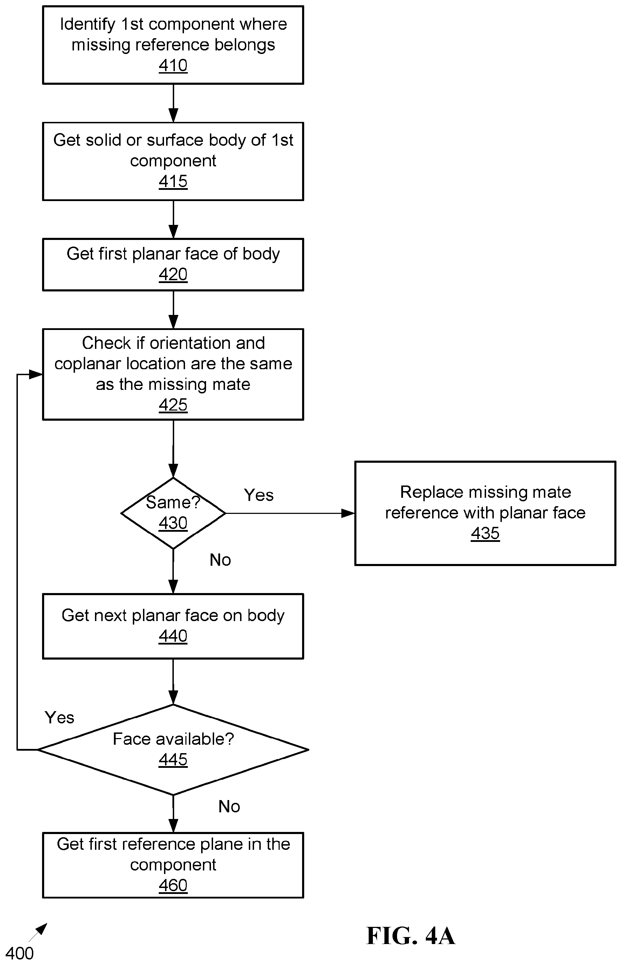

FIGS. 4A-B show a flowchart 401, of an exemplary method embodiment for automatically replacing a missing feature, here a planar face or reference plane, for component part of a CAD modeled assembly. It should be noted that any process descriptions or blocks in flowcharts should be understood as representing modules, segments, portions of code, or steps that include one or more instructions for implementing specific logical functions in the process, and alternative implementations are included within the scope of the present invention in which functions may be executed out of order from that shown or discussed, including substantially concurrently or in reverse order, depending on the functionality involved, as would be understood by those reasonably skilled in the art of the present invention.

A first component is identified where a missing component belongs by an auto-repair application, as shown by block 410. The data structure of a mate reference holds the information including any components it belongs to, the type of the reference, and whether the reference is missing or invalid, amongst other data. A first solid or surface body of the first component is identified, as shown by block 415. The bodies of the component may be obtained from the mate's reference data structure. A component may have single or multiple bodies, and the application may iterate over all the bodies. This methodology applies for obtaining entities (face, edge, vertex) of the bodies. The selection of a body in case of a multibody component is described below.

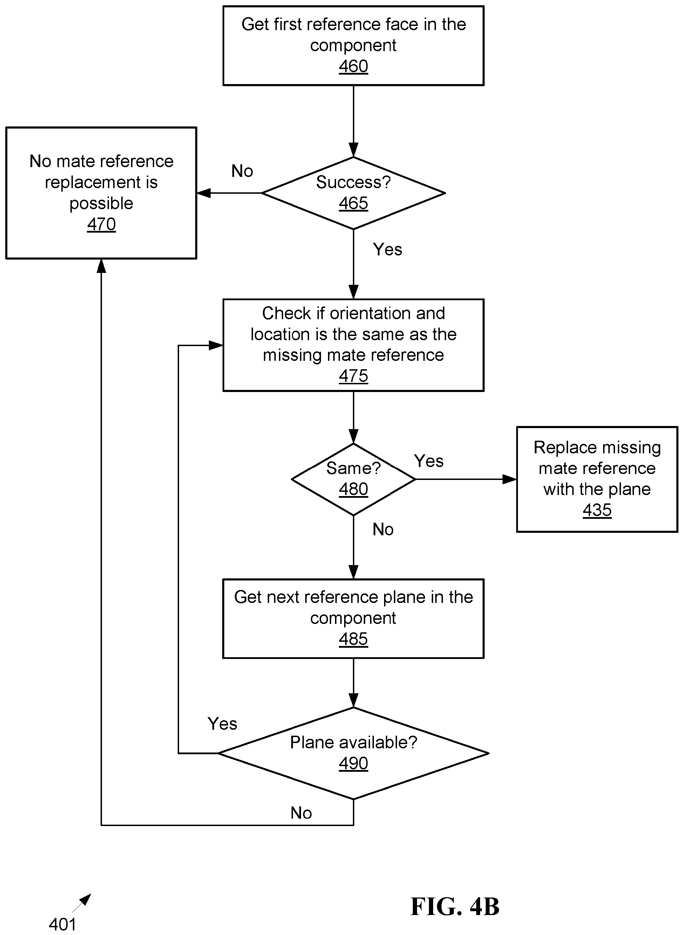

A first candidate replacement planar face of the solid/body is identified, as shown by block 420. As shown by block 425, the auto-repair application compares the candidate planar face of the body with the missing planar face parameters for the following conditions: (1) the orientation of the candidate replacement face matches the orientation of the missing face, and (2) the location of the candidate replacement face matches the location of the missing face. Here, the two faces must be coplanar, with one contained by the other. If conditions 1 and 2 are met, as shown by block 430, the missing mate reference is replaced with the candidate replacement face, as shown by block 435. If conditions 1 and 2 are not met, the application searches for a second candidate face that overlaps with the missing face at the location indicated by the missing face reference, as shown by block 440. If the second candidate face is found, it is checked as per blocks 425, 430, 435, 440 above. If no face is available, as per block 445, the application searches for a reference plane in the component that matches the missing planar face parameters, as shown by block 460. Moving to FIG. 4B, if a reference plane is not found ("no" branch of block 465), the application determines no reference replacement is available. If a reference plane is found ("yes" branch of block 465), the application checks if orientation of the reference plane matches the orientation of the missing face, and the location of the reference plane matches the location of the missing face, as shown by block 475. Here the reference plane should be coplanar with the missing face. If the matching reference plane is found, as per the "yes" branch of block 480, the missing mate reference is replaced with the reference plane, as shown by block 435. Otherwise, the application searches for subsequent reference planes, as shown by block 485. If the second reference plane is found, it is checked as per blocks 475, 480, 435 above. If no further reference planes are available (block 490, "no" branch), the application indicates this with an error message, as per block 470. If a candidate reference plane has an opposite orientation (i.e., normal direction) to the missing face, the candidate replacement face or reference plane may still be considered with the `mate alignment' flipped.

In a scenario where the missing mate reference is a planar face on a single body part, there is no reference face, so the process of FIG. 4 cannot proceed to block 460, but instead returns an error message.

Other scenarios may occur for a multibody part. For example, if the mate reference feature is a missing planar face (scenario A), the auto-repair application first identifies the component where the missing reference belongs. Here the application first calculates a bounding box having dimensions and coordinates containing the missing planar face, then computes bounding boxes for all other solid and surface bodies of the component. The auto-repair application iterates over all the bodies and checks for an intersection (match) between the bounding box of the body and the bounding box of the missing face. The first body found that intersects with missing face is used for further search of face entities. This way the auto-repair application improves performance when there are components with a large number of bodies. When a body is found, the application proceeds from block 425 of FIG. 4A, as described above. If no face is found on the selected body, the application may expands the bounding box of the missing planar face, for example by 10%, and then iterates over all the bodies again to find a body that intersects with this expanded bounding box. By proceeding in this manner, the application may find 'neighboring' bodies that may possibly be used to search for a viable planar face that can replace the missing one. It should be noted that here a contained or overlapping planar face may not be found, yet a coplanar face can be found that still solves the mate requirements. For example, if a mate requires a pair of planar faces, since the solver only considers the `infinite geometry' definition of the faces, then any planar face in the model with a parallel or anti-parallel normal, and a base point co-planar to the original plane may be considered geometrically equivalent, and therefore satisfy the constraint.

When the missing feature is a cylindrical face (Scenario B), the method is similar to Scenario A, with modifications to the search parameters and comparison criteria. Here, the auto-repair application compares each cylindrical face of the body with the following parameters of the missing cylindrical face:
a. The axis of the cylindrical face should match the axis of the missing cylindrical face,
b. the radius of the cylindrical face should match the radius of the missing cylindrical face, and
c. the location of the faces should match such that one is contained by the other.

If a contained face is not found, then search for one that 'overlaps' the missing face location (as determined by its bounding box).

When searching for a missing conical/toroidal/spherical face (Scenario C), the method for is similar to Scenario A, but here the conical, spherical, and toroidal parameters of the replacement candidate must be exactly the same as the missing face, for example, having the same radius, center, and the like.

When searching for a missing linear edge or reference axis ("refAxis") (Scenario D), the method for is similar to Scenario A, but here the auto-repair application compares each linear edge of the body with the missing edge parameters. The direction of the edge should match the direction of the missing edge, and the location should match such that the two edges are collinear and coincident or overlapping. In case of multibody part, if a matching/overlapping edge is not found, the auto-repair application searches for an edge on neighboring bodies (as long as it is collinear with the missing edge). If a candidate replacement edge or reference axis has an opposite orientation (i.e., direction) to the missing edge or axis, the candidate replacement edge or reference axis will still be considered with the `mate alignment' flipped. This is similar to what is done for the face/plane scenario described above.

When searching for a missing circular edge (Scenario E), the method for is similar to Scenario A, but here the auto-repair application compares each circular edge of the body with the missing edge parameters. The axis of the circular edge should match the axis of the missing circular edge, and the radius and center point should match.

When searching for a missing vertex and/or refPoint (reference point) (Scenario F), the method for is similar to Scenario A, but here the auto-repair application compares each vertex of the body with the missing vertex such that point (x,y,z) positions match.

When searching for a general face (non-analytic) used by some advanced and mechanical mates (Scenario G), the method for is similar to Scenario A, but here the auto-repair application compares each general of the body with the missing face such that they are coincident.

When searching for a general curve (splines, ellipses etc.) used by some advanced and mechanical mates (Scenario H), the method for is similar to Scenario A, but here the auto-repair application compares each general curve of the body with the missing curve such that they are coincident.

Under a second exemplary embodiment, the auto repair of mates/contraints is adapted for use in a CAD system running in a large design review (LDR) configuration. In edit mode ("edit option"), LDR opens very large assemblies quickly, while still retaining capabilities that are useful when conducting design reviews of assemblies. LDR loads the components or references with graphics only data, i.e., tessellated data only and with no bodies. In LDR mode, the auto repair functionality provides challenges not present under the first embodiment, due to missing bodies, faces, among other aspects in the graphics only body. The auto repair of constraints under LDR mode is beneficial for saving a user time when finding missing mates in very large assemblies that may take a long time to load, for example on the order of several seconds when loaded in LDR mode with edit option.

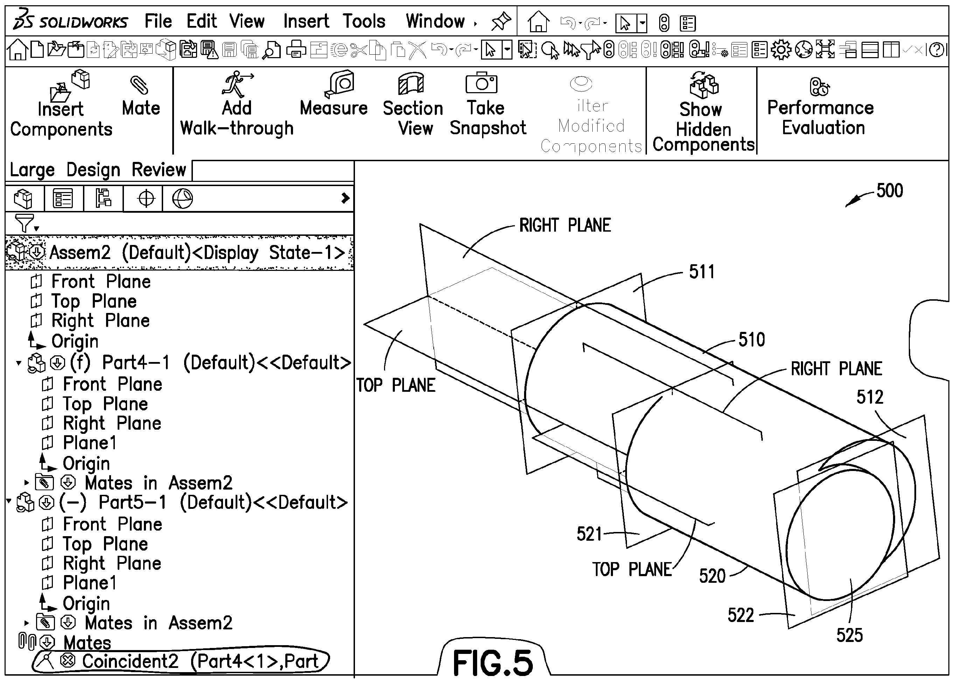

FIG. 5 is a screenshot 100 from a CAD program showing a failed mate due to missing entity in view only mode i.e., with tessellated data only. FIG. 5 is used to describe several subsequent exemplary scenarios. An assembly 510 includes a first substantially cylindrical structure 510 bounded by a first plane end 511 and a second end plane 512 on opposite ends, and a second substantially cylindrical structure 520 bounded by a first plane end 521 and a second end plane 522 on opposite ends. The second structure 520 has a circular missing face 525 coinciding with the second end plane 522.

Under the second embodiment, the specifics of replacing a missing mate depend on the type of feature comprising the mate, for example, a missing face, a missing edge, or a missing vertex.

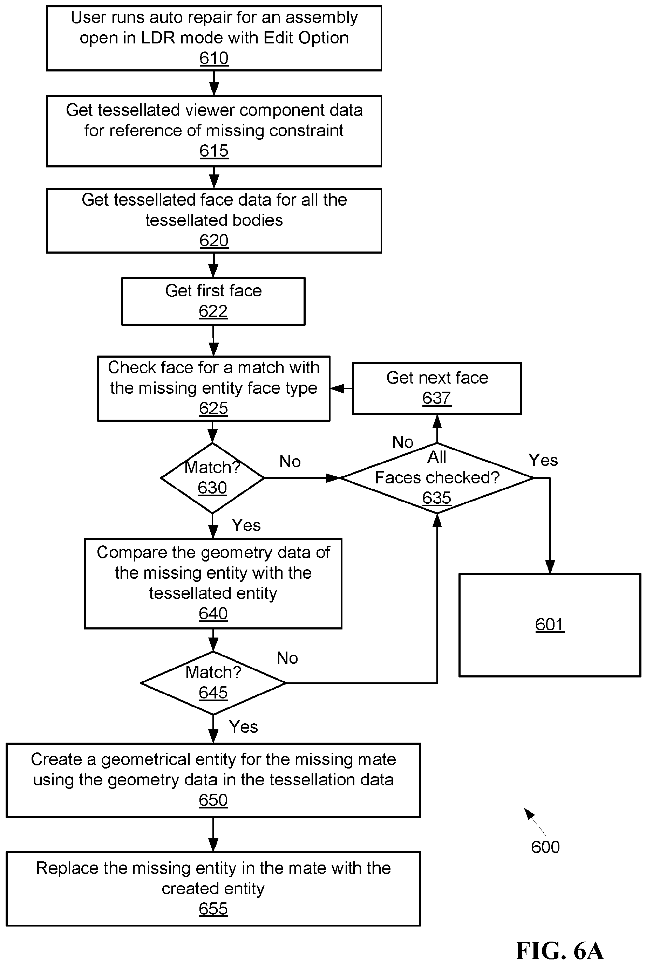

A scenario where the missing mate is a missing face is shown by the flowcharts 600-601 of FIGS. 6A-B illustrating the second exemplary embodiment method, the user is running a CAD system (for example, SOLIDWORKS), and has opened an assembly in LDR mode with the edit option where a missing constraint has been identified and its geometry determined. The user runs the LDR auto-repair application, as shown by block 610. It should be noted the user interface may not specify between the LDR auto-repair application of the second embodiment and the auto-repair application of the first embodiment, but may instead provides a general "repair missing mates" option to the user, where the CAD system launches the appropriate auto-repair application according to the context of how the user has configured the CAD environment. The auto-repair application gathers the viewer component tessellation data for the missing constraint included in the assembly with the LDR /view, as shown by block 615.

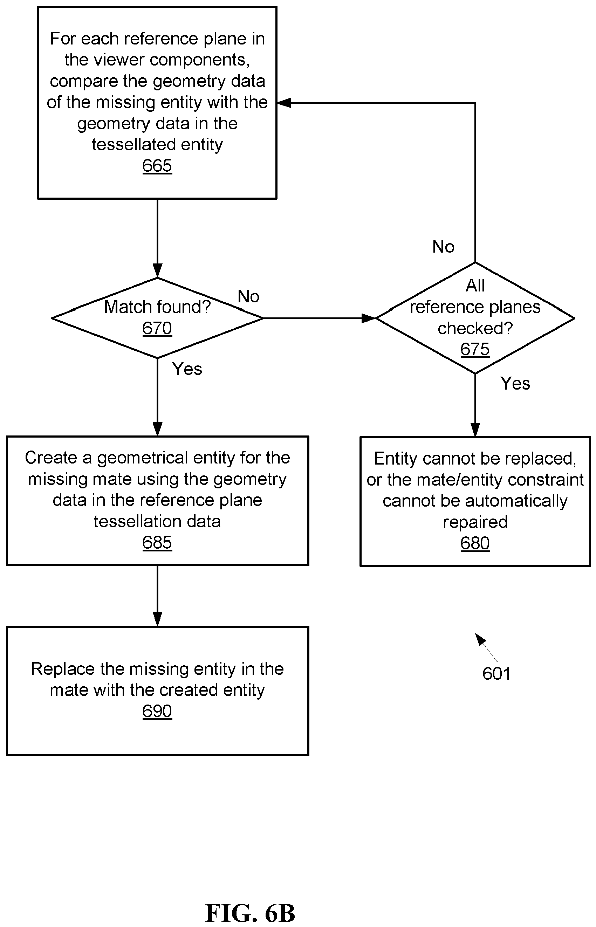

The auto-repair application gathers tessellated face data for all the tessellated bodies in the assembly, as shown by block 620, and begins (starting with a first face, block 622) to iterate through each of the faces to compare each with the missing entity face type, as shown by block 625, for example, a planar face, a cylindrical face, or a conical face, among others. If a face type does not match, as per the "no" branch of block 630, and if all faces have not been checked, as per the "no" branch of block 635, the next face of the gathered faces is checked, as per block 637. If all faces have been checked without finding a match of the tessellated entity type and the missing entity, processing proceeds to the flowchart 601 of FIG. 6B, as per the "yes" branch of block 635.

Returning to block 625, if the face type of the tessellated entity of the present iteration does match, as per the "yes" branch of block 630, the auto-repair application compares the geometry data for the tessellated entity with the geometry data for the missing entity, as shown by block 640. If the geometry matches, as per the yes branch of block 645, the auto-repair application creates a geometrical entity for the missing mate using the geometry data in the tessellation data (see US patent No. 11,126,759, entitled "Adding Constraints Between Components Of A Computer-Aided Design (CAD) Model"), as shown by block 650. This specifics of this step may vary based on the missing entity face type. For example, for a planar face, the missing entity face may be created if both the geometry data are coplanar, and a bounding box of the tessellated face is contained in that of a missing entity bounding box. The missing entity in the mate is replaced by the created entity, as shown by block 655. It should be noted that once the assembly is saved in LDR mode, the replaced entity may also be replaced in the normal ("lightweight") mode.

As noted above, if no match has been found between the geometry data of any of the tessellated entity faces and the geometry data of the missing face, the method proceeds as per flowchart 601 (FIG. 6B). For each reference plane in the viewer components, the auto-repair application attempts to match the geometry data of the missing entity with the geometry data in the tessellated entity, as shown by block 665. If a match is found, as per the yes branch of block 670, the auto-repair application creates a geometrical entity for the missing mate using the geometry data in the reference plane tessellation data, as shown by block 685. The auto-repair application replaces the missing entity in the mate with the created entity, as shown by block 685.

If all reference planes in the viewer components have been checked against the missing entity, as shown by the yes branch of block 675, the auto-repair application is not able to automatically repair the missing mate, as shown by block 680.

The above method may be altered according to the geometry of the missing mate. For example, the following summarizes an alternative approach when the missing mate is an edge:
1. Identify the viewer component the missing entity belongs to.
2. Get the geometry data of the missing entity.
3. Get the type of missing entity, for example, linear, circular, generic curve, or axis.
4. Get the viewer component tessellation data for the assembly when loaded to LDR /view.
5. If the missing mate type is an axis, then iterate through the reference axis of the viewer component. If the geometry matches of one of the reference axis with that of missing entity, then proceed to steps 8 and 9, otherwise proceed from step 6.
6. Iterate through the tessellated data of the bodies and the tessellated data of the faces. Store the edge IDs for all the tessellated data of the faces. Using the edge IDs, get the type of curve in the graphics (linear or circular) and the tessellated points for the graphical entity. Create the graphical edge entity using the tessellated points.
7. If the geometry type for the graphics edge entity of step 6 matches the missing entity type, compare the geometry data in the tessellated data of the edge with the geometry data of the missing entity (from step 2). In an example of a missing mate having a linear edge, if both the geometry data for both the missing edge and the tessellated edge have the same direction and the same start or end point, then there is match.
8. If there is a match, create a geometrical entity using the geometry data in the tessellation data.
9. Use the entity created in step 8 to replace the missing mate or constraint. The created entity is persistent with resolved data as well, because the data of face IDs and edge IDs is stored in the view only or graphics data.
10. If no match is found, continue with other tessellated faces.
11. If all faces have been unsuccessfully searched, the mate is not repaired.

The following summarizes an alternative approach when the missing mate is a vertex:
1. Identify the viewer component the missing entity belongs to.
2. Get the geometry data of the missing entity.
3. Set the type of missing entity as point.
4. Get the viewer component tessellation data for the assembly when loaded to LDR /view.
5. Iterate through the tessellated data of the bodies and the tessellated data of the faces. Store the edge IDs for all the tessellated data of the faces. Use the information about the tessellated points for the graphical entity.
6. Compare the tessellated point data with the missing entity data from step 2.
7. If there is a match in step 6, create the geometrical entity using the geometry data in the tessellation data.
8. Use the entity created in step 7 to replace the missing mate or constraint.

The present system for executing the functionality described in detail above may include a computer, an example of which is shown in the schematic diagram of FIG. 57. The system 700 contains a processor 702, a storage device 704, a memory 706 having software 708 stored therein that defines the abovementioned functionality, input, and output (I/O) devices 710 (or peripherals), and a local bus, or local interface 712 allowing for communication within the system 700. The local interface 712 can be, for example but not limited to, one or more buses or other wired or wireless connections, as is known in the art. The local interface 712 may have additional elements, which are omitted for simplicity, such as controllers, buffers (caches), drivers, repeaters, and receivers, to enable communications. Further, the local interface 712 may include address, control, and/or data connections to enable appropriate communications among the aforementioned components.

The processor 702 is a hardware device for executing software, particularly that stored in the memory 706. The processor 702 can be any custom made or commercially available single core or multi-core processor, a central processing unit (CPU), an auxiliary processor among several processors associated with the present system 700, a semiconductor based microprocessor (in the form of a microchip or chip set), a macroprocessor, or generally any device for executing software instructions.

The memory 706 can include any one or combination of volatile memory elements (e.g., random access memory (RAM, such as DRAM, SRAM, SDRAM, *etc.*)) and nonvolatile memory elements (*e.g.,* ROM, hard drive, tape, CDROM, *etc.*). Moreover, the memory 706 may incorporate electronic, magnetic, optical, and/or other types of storage media. Note that the memory 706 can have a distributed architecture, where various components are situated remotely from one another, but can be accessed by the processor 702.

The software 708 defines functionality performed by the system 700, in accordance with the present invention. The software 708 in the memory 706 may include one or more separate programs, each of which contains an ordered listing of executable instructions for implementing logical functions of the system 700, as described below. The memory 706 may contain an operating system (O/S) 720. The operating system essentially controls the execution of programs within the system 700 and provides scheduling, input-output control, file and data management, memory management, and communication control and related services.

The I/O devices 710 may include input devices, for example but not limited to, a keyboard, mouse, scanner, microphone, *etc.* Furthermore, the I/O devices 710 may also include output devices, for example but not limited to, a printer, display, *etc.* Finally, the I/O devices 710 may further include devices that communicate via both inputs and outputs, for instance but not limited to, a modulator/demodulator (modem; for accessing another device, system, or network), a radio frequency (RF) or other transceiver, a telephonic interface, a bridge, a router, or other device.

When the system 700 is in operation, the processor 702 is configured to execute the software 708 stored within the memory 706, to communicate data to and from the memory 706, and to generally control operations of the system 700 pursuant to the software 708, as explained above.

When the functionality of the system 700 is in operation, the processor 702 is configured to execute the software 708 stored within the memory 706, to communicate data to and from the memory 706, and to generally control operations of the system 700 pursuant to the software 708. The operating system 720 is read by the processor 702, perhaps buffered within the processor 702, and then executed.

When the system 700 is implemented in software 708, it should be noted that instructions for implementing the system 700 can be stored on any computer-readable medium for use by or in connection with any computer-related device, system, or method. Such a computer-readable medium may, in some embodiments, correspond to either or both the memory 706 or the storage device 704. In the context of this document, a computer-readable medium is an electronic, magnetic, optical, or other physical device or means that can contain or store a computer program for use by or in connection with a computer-related device, system, or method. Instructions for implementing the system can be embodied in any computer-readable medium for use by or in connection with the processor or other such instruction execution system, apparatus, or device. Although the processor 702 has been mentioned by way of example, such instruction execution system, apparatus, or device may, in some embodiments, be any computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the processor or other such instruction execution system, apparatus, or device.

Such a computer-readable medium can be, for example but not limited to, an electronic, magnetic, optical, electromagnetic, infrared, or semiconductor system, apparatus, device, or propagation medium. More specific examples (a nonexhaustive list) of the computer-readable medium would include the following: an electrical connection (electronic) having one or more wires, a portable computer diskette (magnetic), a random access memory (RAM) (electronic), a read-only memory (ROM) (electronic), an erasable programmable read-only memory (EPROM, EEPROM, or Flash memory) (electronic), an optical fiber (optical), and a portable compact disc read-only memory (CDROM) (optical). Note that the computer-readable medium could even be paper or another suitable medium upon which the program is printed, as the program can be electronically captured, via for instance optical scanning of the paper or other medium, then compiled, interpreted, or otherwise processed in a suitable manner if necessary, and then stored in a computer memory.

In an alternative embodiment, where the system 700 is implemented in hardware, the system 700 can be implemented with any or a combination of the following technologies, which are each well known in the art: a discrete logic circuit(s) having logic gates for implementing logic functions upon data signals, an application specific integrated circuit (ASIC) having appropriate combinational logic gates, a programmable gate array(s) (PGA), a field programmable gate array (FPGA), etc.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A method for automatically repairing a reference corresponding to a missing constraint of a component feature, the constraint missing from the component of a modeled assembly in a computer aided drafting (CAD) environment based on a modification to the assembly, the method comprising the steps of:
identifying a first component where the reference indicates the missing component feature belongs;
identifying a solid or surface body of the first component;
identifying a candidate replacement feature of the first solid or surface body;
comparing the candidate replacement feature with the missing feature; and
if the candidate comparison meets a predetermined criteria, replacing the missing constraint reference with a reference of the candidate replacement feature.

2. The method of claim 1, wherein the candidate comparison further comprises:
comparing the orientation of the candidate replacement feature with the orientation of the missing feature; and
comparing the location of the candidate replacement feature with the location of the missing feature.

3. The method of claim 1, wherein the missing feature comprises a face.

4. The method of claim 3, wherein the face consists of one of the group of a planar face, a cylindrical face, a conical face, a toroidal face, and a spherical face.

5. The method of claim 2, wherein the comparing further comprises determining the features are coplanar.

6. The method of claim 1, wherein the missing feature comprises an edge.

7. The method of claim 6, wherein the edge consists of one of the group of a linear edge, a curved edge, a reference axis, a circular edge, a spline, and an ellipse.

8. The method of claim 1, further comprising the steps of:
if the candidate comparison fails the predetermined criteria:
identifying a reference feature in the first component that matches a parameter of the missing feature;
comparing the reference feature with the missing feature; and
if the reference feature comparison meets the predetermined criteria, replacing the missing constraint reference with the reference feature.

9. The method of claim 1, wherein identifying the candidate replacement feature of the first solid or surface body further comprises the steps of:
calculating a first bounding box having dimensions and coordinates containing the missing feature,
computing second bounding box a solid or surface body of the component; and
identifying an intersection between the first bounding box and the second bounding box.

10. A computer aided drafting (CAD) system comprising:
a processor and a memory containing non-transient instructions that, when executed by the processor, cause the processor to carry out the method of any one of claims 1 to 9.

11. A computer program comprising instructions which, when the program is executed by a computer, cause the computer to carry out the method of any one of claims 1 to 9.

12. A computer readable storage medium having recorded thereon the computer program of claim 11.
